Europäisches Patentamt

European Patent Office

Office européen des brevets

(11) Veröffentlichungsnummer: **0 149 429**
**B1**

(12) **EUROPÄISCHE PATENTSCHRIFT**

(45) Veröffentlichungstag der Patentschrift: **06.02.91**

(51) Int. Cl.⁵: **B 23 Q 1/18**

(21) Anmeldenummer: **84810627.4**

(22) Anmeldetag: **17.12.84**

(54) Einrichtung zur Halterung eines Gegenstandes in einer gewünschten räumlichen Lage.

(30) Priorität: **20.12.83 CH 6799/83**
**26.01.84 CH 346/84**

(43) Veröffentlichungstag der Anmeldung:
**24.07.85 Patentblatt 85/30**

(45) Bekanntmachung des Hinweises auf die
Patenterteilung:
**06.02.91 Patentblatt 91/06**

(84) Benannte Vertragsstaaten:
**CH DE FR GB IT LI SE**

(56) Entgegenhaltungen:
| | |
|---|---|
| CH-A- 154 593 | GB-A- 659 400 |
| DE-B-1 243 946 | GB-A-1 166 554 |
| FR-A-1 421 458 | GB-A-1 441 289 |
| FR-A-2 381 935 | US-A-1 365 536 |
| FR-A-2 462 231 | US-A-1 405 670 |
| GB-A- 104 544 | US-A-1 407 015 |
| GB-A- 514 542 | US-A-4 300 271 |

(73) Patentinhaber: **Büchler B-SET AG**
**Wiler Strasse 98**
**CH-9230 Flawil (CH)**

(72) Erfinder: **Büchler, René**
**Weidweg 2**
**CH-9245 Sonnental (CH)**

(74) Vertreter: **EGLI-EUROPEAN PATENT**
**ATTORNEYS**
**Horneggstrasse 4**
**CH-8008 Zürich (CH)**

## Beschreibung

Die vorliegende Erfindung betrifft eine Einrichtung zum Halten eines Werkstückes in einer gewünschten räumlichen Lage.

Die GB—A—11 66 554 offenbart bereits eine Einrichtung zum Halten eines Werkstückes in einer gewünschten Lage, die zwei zusammenarbeitende Komponenten hat, wobei die erste dieser Komponenten, an der das Werkstück befestigbar ist, als ein Schlitten ausgeführt ist, wobei Randpartien zweier gegenüberliegender Seitenflächen dieses Schlittens, die sich an eine gemeinsame Oberfläche des Schlittens anschließen, mit Furchen versehen sind, und wobei ferner die zweite Komponente eine Ausnehmung zur Aufnahme der profilierten Partie des Schlittens aufweist.

Allgemein sind im Werkzeugmaschinenbau sogenannte "Schwalbenschwanzführungen" zur räumlichen Festlegung zweier zueinander linear beweglicher Teile bekannt, wie sich beispielsweise aus der US—A—43 00 271 ergibt.

Ausgehend von diesem Stand der Technik liegt der Erfindung die Aufgabe zugrunde, eine Einrichtung zum Halten eines Werkstückes in einer gewünschten räumlichen Lage zu schaffen, mit der das Werkstück bei einfacher Einstellung seiner räumlichen Lage hochgenau festlegbar ist.

Diese Aufgabe wird durch eine Einrichtung gemäß dem Patentanspruch gelöst.

Nachfolgend werden Ausführungsbeispiele der vorliegenden Erfindung anhand der beiliegenden Zeichnungen näher erläutert. Es zeigen:

Fig. 1 eine perspektivische Darstellung einer ersten Ausführungsform der erfindungsgemäßen Einrichtung zum Halten eines Werkstückes in einer gewünschten räumlichen Lage;

Fig. 2 eine perspektivische Darstellung einer zweiten Komponente der Einrichtung gemäß Fig. 1; und

Fig. 3 eine perspektivische Darstellung einer Ausführungsform einer ersten Komponente der Einrichtung gemäß Fig. 1.

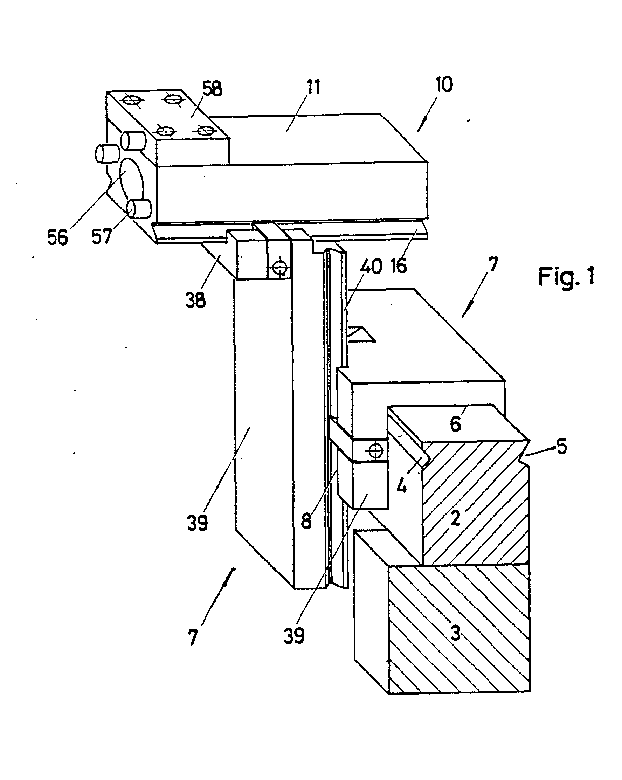

Mit 1 ist in Fig. 1 eine Unterlage angedeutet, auf der die vorliegende Einrichtung aufgestellt ist. Diese Unterlage kann ein Maschinentisch, ein Tisch des Voreinstellplatzes usw. sein. Es ist ein Balken 2 vorgesehen, der auf Füßen 3 ruht, welche auf der Unterlage 1 in allgemein bekannter Weise befestigt sind. In Fig. 1 ist nur einer der genannten Füße 3 dargestellt. Die obere Partie des Balkens 2 weist Nuten 4 und 5 auf, die in einander gegenüberliegenden Randpartien des Balkens 2 ausgeführt sind. Die so geformte Randpartie des Balkens 2 liegt in der Ausnehmung 6 einer ersten Komponente 7 der vorliegenden Einrichtung, die zudem noch eine zweite Ausnehmung 8 aufweist. Die zwei Ausnehmungen 6 und 8 schließen im dargestellten Beispiel einen Winkel von etwa 90 Grad ein. Die Achsen der genannten Ausnehmungen können jedoch auch parallel verlaufen oder einen beliebigen anderen Winkel schließen.

Eine dritte Komponente 10 der vorliegenden Einrichtung weist ein längliches Element 11 auf, das nachstehend auch Schlitten genannt wird. Der Querschnitt dieses Schlittens 11 ist im wesentlichen eckig. Im dargestellten Beispiel ist der Schlitten 11 verhältnismäßig flach. Der Schlitten 11 kann jedoch auch beispielsweise einen quadratischen Querschnitt aufweisen oder er kann in der Ausnehmung 8 der zweiten Komponente 7 auch hochkant stehen. Die zwei vertikalen Seitenwände 12 und 13, die sich an die Unterseite 14 des Schlittens 11 anschließen, sind in ihrer unteren Partie mit Furchen 15 und 16 versehen. Diese Furchen 15 und 16 stehen mit den entsprechenden geformten Seitenwänden 17 und 18 der Ausnehmung 8 in Eingriff. Eine nähere Beschreibung der Furchen 4, 5 und 15, 16 sowie der Ausnehmungen 6 und 8 samt der Feststellmittel für die sich in der jeweiligen Ausnehmung 6 bzw. 8 befindlichen profilierten partien befindet sich beispielsweise in der europäischen Patentanmeldung EP—A—116 260, die einen Stand der Technik im Sinne des Art. 54(3)EPÜ bildet. Im weiteren wird die mit dem Schlitten 11 versehene Komponente 10 als die dritte Komponente und die die Ausnehmung 8 aufweisende Komponente 7 als erste bzw. zweite Komponente bezeichnet.

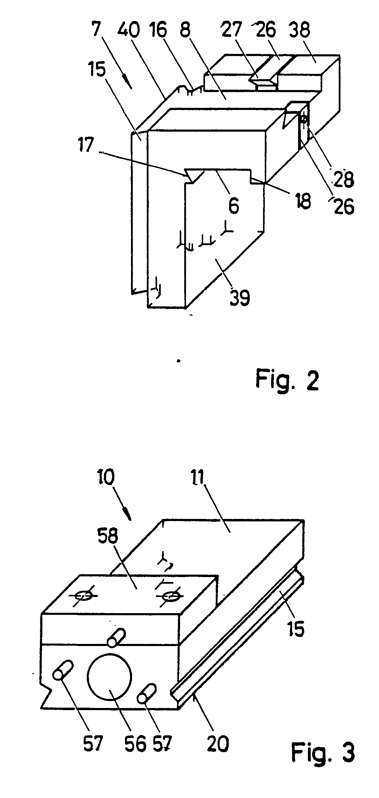

Gemäß Fig. 1 steht die L-förmige erste Komponente 7 mit einer seitlichen Ausnehmung 8 im vertikalen Schenkel 39 über ihre innere Ausnehmung 6 mit dem Balken 2 in Eingriff. In der vertikalen Ausnehmung 8 befindet sich der Vorsprung 40 der zweiten L-förmigen Komponente 7, die in Fig. 3 dargestellt ist. In der seitlichen Ausnehmung 8 dieser weiteren L-förmigen Komponente 7 liegt die in Fig. 5 dargestellte dritte Komponente 10 der vorliegenden Einrichtung. Diese Komponente 10 weist einen Schlitten 11 auf, bei dem eine Endpartie desselben mit der Öffnung 56 zur Aufnahme eines Schaftes ausgeführt ist.

In Fig. 2 ist eine Ausführungsform der ersten bzw. zweiten Komponente 7 dargestellt. Die Komponente 7 ist in einem vertikalen Schnitt im wesentlichen L-förmig, so daß sie einen ersten, horizontalen Schenkel 38 und einen zweiten, vertikalen Schenkel 39 aufweist. Die Unterseite des horizontalen Schenkels 38 enthält eine erste Ausnehmung 6 und die Oberseite desselben eine zweite Ausnehmung 8, wobei diesen Ausnehmungen eine Klinke 26 mit Nasen 27 und Befestigungsschrauben 28 zugeordnet sind. Die Außenseite des vertikalen Schenkels 39 dieser L-förmigen Komponente ist mit einem Vorsprung 40 versehen, in dessen Seitenwänden die bereits besprochenen Furchen 15 und 16 ausgeführt sind. Ein solcher Vorsprung 40 kann somit in der Ausnehmung einer weiteren Komponente dieser Einrichtung liegen. Eine solche Anordnung des Vorsprunges 40 mit den Furchen 15 und 16 ermöglicht daher, weitere Lagen des Gegenstandes im Raum auf eine einfache Weise zu erreichen.

Gemäß Fig. 3 ist die Stirnseite des Schlittens 11 mit einer runden Öffnung 56 versehen, die zur Aufnahme des hier bereits früher besprochenen Schaftes mit rundem Querschnitt dient. Diese Maßnahme ermöglicht den Anschluß jener Komponenten einer solchen Einrichtung, die einen runden Schaft aufweisen und die in der bereits genannten schweizerischen Patentanmeldung näher beschrieben sind. Um die Öffnung 56 herum sind abstehende Stifte 57 verteilt, die als Anschläge zur Einstellung der gewünschten Winkellage des runden Schaftes dienen. Wenn der eckige Schlitten 11 zu dünn ist, dann kann auf diesem eine Hilfsplatte 58 wegnehmbar befestigt sein, die einen der Anschlagstifte 57 trägt.

## Patentanspruch

Einrichtung zum Halten eines Werkstückes in einer gewünschten räumlichen Lage, mit folgenden Merkmalen:

einem horizontalen Balken (2), der an einem Maschinentisch mittels wenigstens eines Fußes (3) befestigbar ist, wobei der horizontale Balken (2) eine Oberfläche und zwei Seitenflächen hat, wobei die Seitenflächen entgegengesetzt angeordnete, winkelförmige Furchen aufweisen;

einer ersten, L-förmigen Komponente (7) mit einem ersten horizontalen Körperteil (38) und einem ersten sich daran anschließenden vertikalen Schenkelteil (39), wobei der erste horizontale Körperteil eine längliche Ausnehmung aufweist, die eine Bodenwand (6) und zwei Seitenwände definiert, wobei die Bodenwand (6) auf der Oberfläche des horizontalen Balkens (2) ruht, wobei eine Seitenwand (17) winkelförmig bezüglich der Bodenwand angeordnet ist, um mit einer Furche (4) des Balkens (2) Eingriff zu nehmen, und wobei die andere Seitenwand (18) im wesentlichen rechtwinklig zu der Bodenwand (6) angeordnet ist, wobei der erste horizontale Körperteil (38) ferner eine Ausnehmung und eine darin angeordnete Klinke (26) aufweist, welche eine Nase (27) hat, die sich von der anderen Seitenwand aus erstreckt, um mit der anderen Furche (5) des Balkens (2) Eingriff zu nehmen, wobei der erste vertikale Schenkelteil (39) eine längliche Ausnehmung (8) hat, die eine zweite Bodenwand und zwei zweite Seitenwände festlegt, wobei eine der zweiten Seitenwände winkelmäßig bezüglich der zweiten Bodenwand angestellt ist und die andere zweite Seitenwand im wesentlichen rechtwinklig hierzu angeordnet ist, wobei der erste Schenkelteil (39) ferner eine zweite Ausnehmung und eine zweite Klinke (26), die darin angeordnet ist, hat, welche eine zweite Nase (27) aufweist, die sich von der anderen zweiten Seitenwand des ersten vertikalen Schenkelteiles erstreckt;

einer zweiten, L-förmigen Komponente mit einem zweiten horizontalen Körperteil (38) und einem zweiten, sich daran anschließenden Schenkelteil (39), wobei der zweite vertikale Schenkelteil (39) zwei Seitenflächen mit einander gegenüberliegenden Furchen aufweist, von denen eine Furche (4) mit der im Winkel angeordneten zweiten Seitenwand und die andere Furche (5) mit der zweiten Nase (27) in Eingriff bringbar ist, wobei der zweite horizontale Körperteil (38) eine längliche Ausnehmung aufweist, die eine dritte Bodenwand und zwei Seitenwände festlegt, wobei eine dritte Seitenwand winkelmäßig bezüglich der dritten Bodenwand angestellt ist und die andere dritte Seitenwand im wesentlichen senkrecht zu dieser steht, wobei der zweite horizontale Körperteil ferner eine dritte Ausnehmung und eine dritte, darin angeordnete Klinke hat, wobei die dritte Klinke eine dritte Nase aufweist, die sich von der anderen dritten Seitenwand des zweiten horizontalen Körperteiles erstreckt; und

einer dritten Komponente (11, 56, 57, 58) zum Halten des Werkstückes, mit einem länglichen Schlitten (11) mit eckigem Querschnitt und mit zwei Seitenwänden, die sich an eine für diese gemeinsame Fläche des Schlittens (11) anschließen, wobei die Randpartien der Seitenwände einander entgegengesetzt angeordnete Furchen (15, 16) aufweisen, von denen eine Furche mit der dritten, winkelmäßig angestellten Wand und die andere Furche mit der dritten Nase in Eingriff bringbar ist.

## Revendication

Dispositif destiné à maintenir une pièce à usiner dans une position spatiale souhaitée, comportant les caractéristiques suivantes:

une traverse horizontale (2), qui est susceptible d'être fixée à une table de machine au moyen d'au moins un pied (3), la traverse horizontale (2) comportant une surface supérieure et deux surfaces latérales, les surfaces latérales présentant des rainures de forme angulaire disposées à l'opposé l'une de l'autre;

un premier composant (7) en forme de L, comprenant une première partie de corps (38) horizontale et une première partie de branche verticale (39) qui se raccorde à celle-ci, la première partie de corps horizontale présentant un évidement oblong qui définit une paroi de fond (6) et deux parois latérales, la paroi de fond (6) reposant sur la surface supérieure de la traverse horizontale (2), une paroi latérale (17) étant disposée en formant un angle par rapport à la paroi de fond, afin de venir s'engager dans une rainure (4) de la traverse (2), et l'autre paroi latérale (18) étant disposée sensiblement à angle droit par rapport à la paroi de fond (6), la première partie de corps (38) présentant en outre un évidement et un cliquet (26) disposé dans celui-ci et doté d'une dent (27), qui s'étend à partir de l'autre paroi latérale, en vue de venir s'engager dans l'autre rainure (5) de la traverse (2), la première partie de branche verticale (39) comportant un évidement oblong (8) qui définit une deuxième paroi de fond et deux deuxièmes parois latérales, une des deuxièmes parois latérales formant un angle par rapport à la deuxième paroi de fond, et l'autre deuxième paroi latérale étant disposée sensiblement à angle droit par rapport à celle-ci, la première partie de branche (39) comportant en outre un deuxième évidement et un deuxième cliquet (26) qui est disposé dans celui-ci, et qui présente une deuxième dent (27) qui s'étend à partir de l'autre deuxième paroi latérale de la première partie de branche verticale;

un deuxième composant en forme de L comportant une deuxième partie de corps horizontale (38) et une deuxième pièce de branche (39) qui se raccorde à celle-ci, la deuxième pièce de branche verticale (39) présentant deux surfaces latérales comportant des rainures situées à l'opposé l'une de l'autre, l'une (4) de ces rainures pouvant être engagée sur la deuxième paroi latérale formant un angle et l'autre rainure (5) pouvant être engagée sur la deuxième dent (27), la deuxième partie de corps horizontale (38) présentant un évidement oblong qui définit une troisième paroi de fond et deux parois latérales, une troisième paroi latérale formant un angle par rapport à la troisième paroi de fond et l'autre troisième paroi latérale étant sensiblement perpendiculaire à celle-ci, la deuxième partie de corps horizontale comportant en outre un troisième évidement et un troisième cliquet disposé dans celui-ci, le troisième cliquet présentant une troisième dent qui s'étend à partir de l'autre troisième paroi latérale de la deuxième partie de corps horizontale; et

un troisième composant (11, 56, 57, 58) destinée à maintenir la pièce à usiner, comportant un chariot oblong (11) de section transversale rectangulaire, présentant deux surfaces latérales qui se raccordent à une surface commune du chariot (11), les parties de bord des parois latérales présentant des rainures (15, 16) disposées à l'opposé l'une de l'autre, dont l'une peut être engagée sur la troisième paroi formant un angle et dont l'autre peut engagée sur la troisième dent.

**Claim**

A device for holding a workpiece in a desired spatial position, with the following features;

a horizontal beam (2) which can be mounted on a machine table by means of at least one base (3), the horizontal beam (2) having a surface and two side faces, and the side faces having oppositely arranged angular grooves;

a first L-shaped component (7) with a first horizontal body part (38) and a first vertical leg part (39) adjoining it, the first horizontal body part having an oblong recess which defines a base wall (6) and two side walls, the base wall (6) resting on the surface of the horizontal beam (2), one side wall (17) being arranged angularly in relation to the base wall in order to engage with a groove (4) of the beam (2), and the other side wall (18) being arranged substantially at right angles to the base wall (6), the first horizontal body part (38) also having a recess and a catch (26) arranged therein which has a lug (27) which projects from the other side wall in order to engage with the other groove (5) of the beam (2), the first vertical leg part (39) having an oblong recess (8) which defines a second base wall and two second side walls, one of the second side walls being placed angularly in relation to the second base wall and the other second side wall being arranged substantially at right angles thereto, the first leg part (39) also having a second recess and a second catch (26) arranged therein which has a second lug (27) which extends from the other second side wall of the first vertical leg part;

a second L-shaped component with a second horizontal body part (38) and a second leg part (39) adjoining it, the second vertical leg part (39) having two side faces with grooves opposite each other of which one groove (4) can be brought into engagement with the second side wall arranged in the angle and the other groove (5) can be brought into engagement with the second lug (27), the second horizontal body part (38) having an oblong recess which defines a third base wall and two side walls, a third side wall being placed angularly in relation to the third base wall and the other third side wall being substantially perpendicular to the latter, the second horizontal body part also having a third recess and a third catch arranged therein, the third catch having a third lug which extends from the other third side wall of the second horizontal body part; and a third component (11, 56, 57, 58) for holding the workpiece, with an oblong slide (11) with angular cross-section and with two side walls which adjoin a face of the slide (11) common to both, the edge sections of the side walls having grooves (15, 16) arranged opposite to each other (15, 16) of which one groove can be brought into engagement with the third angularly placed wall and the other groove can be brought into engagement with the third lug.

Fig. 1

7  40  16  8     27  26  38

15

17

28

26

6     18

39

Fig. 2

10     11

58

15

57  56  57     20     Fig. 3